# EUROPEAN PATENT SPECIFICATION

(11) **EP 0 587 356 B1**
(45) Date of publication and mention of the grant of the patent: **16.07.1997**
(21) Application number: 93306824.9
(22) Date of filing: 27.08.1993
(51) Int. Cl.: E21D 11/08

(54) **Coupler device for joining tunnel lining segments**
Kupplungsvorrichtung zum Verbinden von zwei Tunnelausbausegmenten
Dispositif d'accouplement pour joindre deux segments de revêtements de tunnel

(30) Priority: 01.09.1992 GB 9218475
(43) Date of publication of application: 16.03.1994
(73) Proprietor: C.V. BUCHAN LIMITED, Northwich Cheshire CW8 2YA (GB)
(72) Inventor: Thomas, Norman Stanley, Market Drayton, Shropshire TF9 4PQ (GB); Johnstone, Donald Graham, Lytham St. Annes, Lancashire FY8 3BE (GB)
(74) Representative: Feakins, Graham Allan

(56) References cited:
- EP-A- 0 114 514
- EP-A- 0 121 629
- DE-A- 2 457 427
- US-A- 4 457 117

## Description

This invention relates to a coupler device for joining two tunnel lining segments.

DE-A-2 457 427 discloses a coupler device for joining two segments of a tunnel lining, the device including two tubular devices, each device being held in a respective concrete segment and each device having internal means with which a serrated bar or rod can irreversibly engage when the two segments are closed on one another. However, when joining members such as tunnel lining segments in adjacent rings, there can sometimes be difficulty in providing correct alignment when one ring is pushed by rams onto an adjacent ring already in place.

According to the present invention, there is provided a coupler device for joining two segments of a tunnel lining, the device being characterised by a male first part having a part-spherical head arranged to be held in one of said segments, a male second part having a part-spherical head arranged to be held in the other of said segments and a third part for fitting over and coupling said first and second parts, said first and third parts each having complementary means to secure them together and said second and third parts having complementary mating means providing an interference fit between them when the second and third parts are urged one onto the other.

The segments may be made of concrete.

The first and second parts can be identical and can each be in the form of a bolt threaded at one end with the part-spherical head at its other end.

Each of the parts can be made of a plastics material such as nylon or a similar material having suitable qualities to provide the required interference fit when the third part is urged onto the second part.

With the first and second parts in the form of the bolts with threaded ends, the third part can be in the form of a dowel or collar. The collar can be substantially symmetrical, with two internal screw threads extending respectively from the centre of the bore of the collar towards either end. One of the internal screw threads of the collar is arranged to be threaded on the threads of one of the bolts, whilst the other internal screw thread is arranged to be pushed onto the threads of the other bolt as an interference fit. The symmetry of the collar need not be complete - the internal thread of one end can be given a different pitch from that of the other end and therefore from that of the bolt onto which it is to be forced as an interference hit.

The collar may be given an external double taper so that it tapers towards each of its ends from the midpoint of the collar. The external surface of the collar may be threaded or serrated.

The invention also extends to tunnel lining segments incorporating the first and second parts and, in particular, concrete lining segments, with the third part secured on the first part.

The two bolts are held in the concrete by their head portions whilst their threaded portions extend into recesses in the end walls of the segments. The recesses of two adjacent segments can have a shape that is complementary to that of the collar in order to receive same.

The first and third parts could, in one embodiment, be integral with one another.

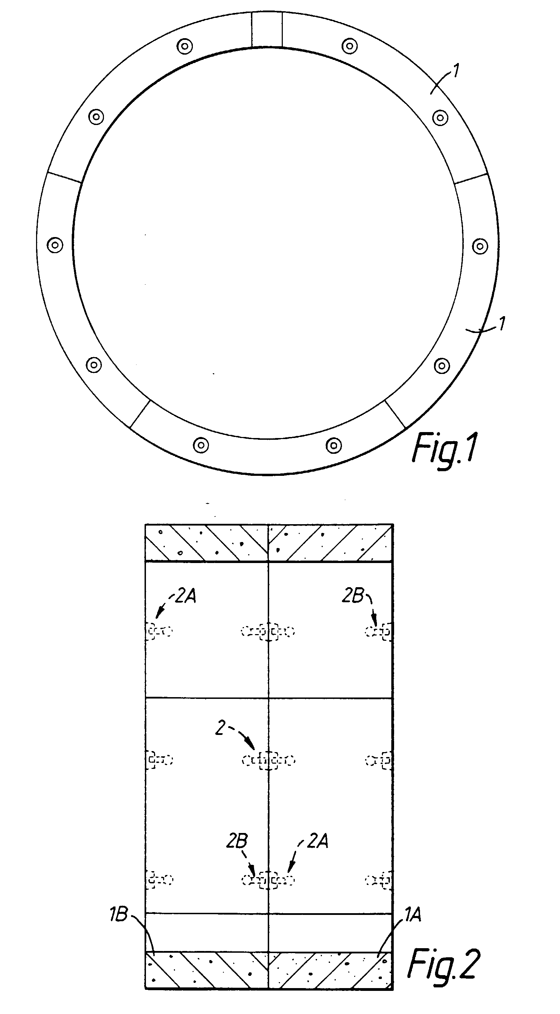

For a better understanding of the invention and to show how the same may be carried into effect, reference will now be made, by way of example, to the accompanying drawings, in which:-
Figure 1 diagrammatically illustrates an end view of a typical concrete tunnel lining ring made up of a plurality of tunnel lining segments,
Figure 2 is a diagrammatic sectional side view of two adjacent rings joined together with coupler devices according to the invention,
Figure 3 is an enlarged sectional side view illustrating two parts of the coupler device for joining the two rings,

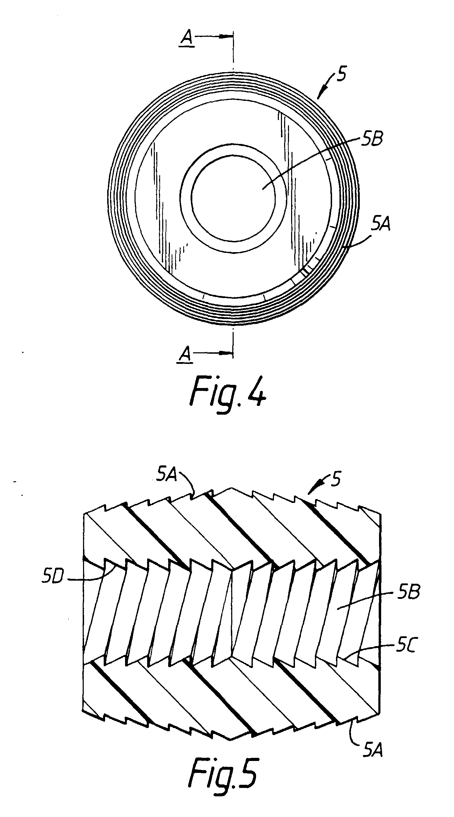

Figure 4 is an end view of a third part of the coupler device, and
Figure 5 is a sectional side view of the third part, taken along line A-A in Figure 4.

It is to be understood that wherever reference is made in this specification to a tunnel lining, the present coupler devices are also intended to be used with lining segments for shafts and the like.

Referring to the drawings, a tunnel lining ring is typically made up of a plurality of concrete lining segments 1 joined to one another. Once a ring has been fitted in place in the tunnel, the next ring can be urged towards the first ring by rams, either as a complete ring or one segment at a time, and automatically joined to it by coupler devices 2, which each comprise substantially symmetrical halves 2A, 2B.

Each device 2 has a first bolt part 3, which acts as an anchor, cast in a concrete lining segment 1A, a second bolt part 4, also acting as an anchor, cast in a concrete lining segment 1B and a third part in the form of a collar 5 for fitting over opposed adjacent threaded ends of the bolts 3 and 4.

The head portions 3A, 4A of the respective bolts are part-spherical and the shanks of the bolts are set in respective tapering recesses 6 in the segments 1A, 1B, thereby allowing the bolts limited angular movement about their heads.

The threaded end 3B, 4B of each bolt is set in a respective frustoconical recess 7 of the segment 1, the recesses 7 opening into the end walls of the segments.

The collar 5 tapers externally from its mid-point in both directions towards its ends and is provided with external threads or serrations 5A. The internal bore 5B of the collar 5 is provided with a buttress type internal thread and, in the form illustrated, one half of the internal bore is provided with an internal thread 5C, whilst the remaining half of the bore is provided with an internal reverse thread 5D of a different pitch to the thread 5C. The thread 5C is arranged to be complementary in pitch to the threads provided on the bolts 3 and 4.

The segments 1, 2, with their cast-in bolts 3, 4, are joined together in the following manner. In each case, the collar 5 is screwed onto the thread 3B of the bolt 3 in the recess 7 of the segment 1A which in practice will form part of the lining ring already constructed. The segment 2, which is part of the next lining ring, which is positioned in a tunnel shield adjacent to the ring comprising the elements 1A, is pushed by a shield ram until the reverse thread 5D of the collar 5 is urged over the threads 4B of the bolt 4, producing an interference fit which in turn provides a non-return locking connection as the segment 1B is urged towards the segment 1A.

By providing differing pitches on the internal threads in the collar 5, a handed arrangement is provided but it will be appreciated that the internal thread could have the same pitch throughout the bore.

It will be further appreciated that the present coupler device provides a completely concealed fixing once the segments have been pushed together and it provides a joint which is the equivalent of a screwed connection.

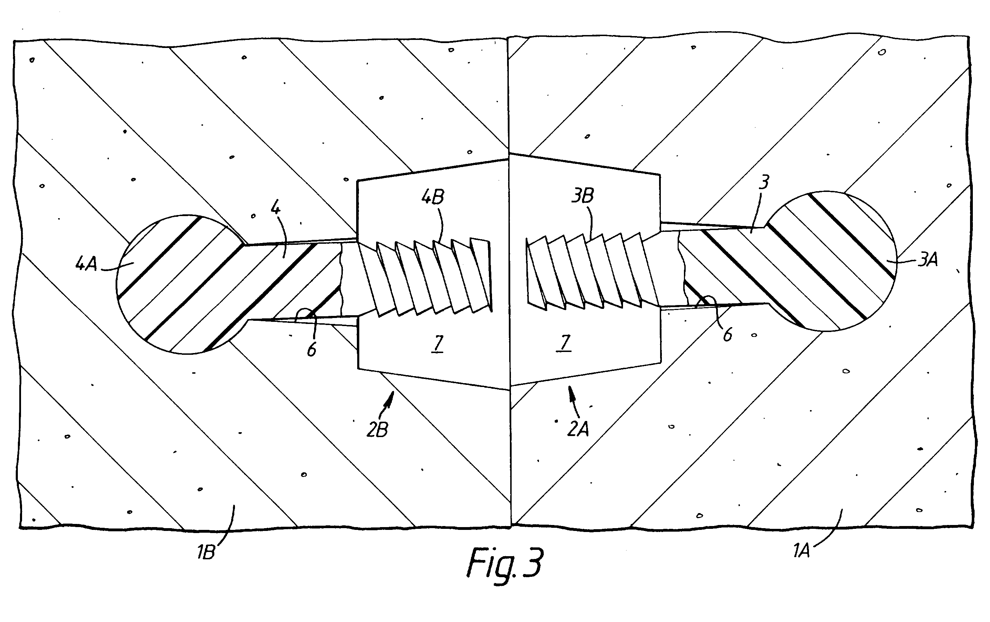

By providing leeway for some movement of the bolts by means of their heads 3A, 4A in the tapered bores 6, it will be appreciated that a connection is provided which accommodates malalignment of segments, as illustrated in Figure 3. Furthermore, the connector collar 5 assists to align the segments but the external serrations serve to accommodate casting tolerances.

It will be further appreciated that the devices can be designed for any given pull out whilst remaining completely concealed and requires no supervision when segments are joined together.

## Claims

1. A coupler device for joining two segments (1) of a tunnel lining, the device being characterised by a male first part (3) having a part-spherical head (3A) arranged to be held in one of said segments (1A), a male second part (4) having a part-spherical head (4A) arranged to be held in the other of said segments and a third part (5) for fitting over and coupling said first and second parts, said first and third parts each having complementary means (3B, 5C) to secure them together and said second and third parts having complementary mating means (4B, 5D) providing an interference fit between them when the second and third parts are urged one onto the other.

2. A device according to claim 1, wherein said first and second parts are identical.

3. A device according to claim 1 or 2, wherein said first and second parts are each in the form of a bolt threaded at one end with its part-spherical head at its other end.

4. A device according to claim 3, wherein said third part is in the form of a dowel or collar.

5. A device according to claim 4, wherein said collar is substantially symmetrical, with two internal screw threads (5C, 5D) extending respectively from the centre of the bore (5B) of the collar towards either end.

6. A device according to claim 5, wherein one of the internal screw threads of said collar is arranged to be threaded on the threads of one of said bolts, whilst the other internal screw thread is arranged to be pushed onto the threads of the other bolt as an interference fit.

7. A device according to claim 5 or 6, wherein the two internal screw threads of said collar have a different pitch to one another.

8. A device according to claim 4, 5, 6 or 7, wherein said collar has an external double taper so that it tapers towards each of its ends from the mid-point of the collar.

9. A device according to any one of claims 4 to 8, wherein the external surface of said collar is threaded or serrated (5A).

10. A device according to any one of the preceding claims, wherein each of said parts is made of a plastics material.

11. A device according to any one of the preceding claims, wherein said first and third parts are integral with one another.

12. A coupler device according to any one of the preceding claims in combination with said two segments (1).

13. A combination according to claim 12, wherein said segments are made of concrete.

14. A combination according to claim 13, wherein the two parts are held in the concrete tunnel lining segments by their head portions, whilst portions beyond their heads extend into recesses (7) in the end walls of the segments, the recesses of two adjacent segments having a shape that is complementary to that of said third part in order to receive same.

15. A combination according to claim 13, 14 or 15, wherein said segments (1) incorporate said first and second parts, (3, 5) respectively.

## Patentansprüche

1. Kupplungsvorrichtung zum Verbinden von zwei Segmenten (1) eines Tunnelausbaus, gekennzeichnet durch ein bolzenartiges erstes Teil (3) mit einem teilkugelförmigen Kopf (3A), der ausgebildet ist, um in einem der Segmente (1A) gehalten zu werden, ein bolzenartiges zweites Teil (4) mit einem teilkugelförmigen Kopf (4A), der ausgebildet ist, um in dem anderen der Segmente gehalten zu werden, und ein drittes Teil (5) zum Darüberpassen und Kuppeln des ersten und zweiten Teils, wobei das erste und dritte Teil jeweils komplementäre Mittel (3B, 5C) haben, um sie aneinander zu befestigen, und das zweite und dritte Teil komplementäre Anschlußmittel (4B, 5D) aufweisen, die zwischen sich einen Preßsitz schaffen, wenn das zweite und dritte Teil aufeinandergepreßt werden.

2. Vorrichtung nach Anspruch 1, wobei das erste und zweite Teil identisch sind.

3. Vorrichtung nach Anspruch 1 oder 2, wobei das erste und zweite Teil jeweils in der Form eines Bolzens sind, der an einem Ende mit einem Gewinde versehen ist und an seinem anderen Ende seinen teilkugelförmigen Kopf aufweist.

4. Vorrichtung nach Anspruch 3, wobei das dritte Teil in der Form eines Dübels oder einer Hülse ist.

5. Vorrichtung nach Anspruch 4, wobei die Hülse im wesentlichen symmetrisch ist, mit zwei Innenschraubgewinden (5C, 5D), die sich jeweils vom Zentrum der Bohrung (5B) der Hülse zu dem jeweiligen Ende erstrecken.

6. Vorrichtung nach Anspruch 5, wobei eines der Innenschraubgewinde der Hülse ausgebildet ist, um auf das Gewinde eines der Bolzen aufgeschraubt zu werden, während das andere Innenschraubgewinde ausgebildet ist, um als Preßsitz auf das Gewinde des anderen Bolzens gedrückt zu werden.

7. Vorrichtung nach Anspruch 5 oder 6, wobei die zwei Innenschraubgewinde der Hülse zueinander verschiedene Gewindesteigungen aufweisen.

8. Vorrichtung nach Anspruch 4, 5, 6 oder 7, wobei die Hülse einen äußeren Doppelkonus hat, so daß sie sich in Richtung jedes ihrer Enden vom Mittelpunkt der Hülse verjüngt.

9. Vorrichtung nach einem der Ansprüche 4 bis 8, wobei die Außenfläche der Hülse mit einem Gewinde versehen oder gezackt (5A) ist.

10. Vorrichtung nach einem der vorhergehenden Ansprüche, wobei jedes der Teile aus einem Kunststoffmaterial besteht.

11. Vorrichtung nach einem der vorhergehenden Ansprüche, wobei das erste und dritte Teil einstückig miteinander ausgebildet sind.

12. Kupplungsvorrichtung nach einem der vorhergehenden Ansprüche, in Kombination mit den zwei Segmenten (1).

13. Kombination nach Anspruch 12, wobei die Segmente aus Beton bestehen.

14. Kombination nach Anspruch 13, wobei die zwei Teile in den Beton-Tunnelausbausegmenten mit ihren Kopfabschnitten gehalten sind, während die sich an ihre Köpfe anschließenden Abschnitte sich in Aussparungen (7) in den Endwänden der Segmente erstrecken, wobei die Aussparungen zweier benachbarter Segmente eine Form aufweisen, die komplementär zu der des dritten Teils ist, um dieses aufzunehmen.

15. Kombination nach Anspruch 13, 14 oder 15, wobei die Segmente (1) jeweils das erste und zweite Teil (3, 5) einschließen.

## Revendications

1. Dispositif d'accouplement pour joindre deux segments (1) d'un revêtement de tunnel, le dispositif étant caractérisé par une première partie mâle (3) ayant une tête en forme de partie de sphère (3A) agencée pour être tenue dans l'un desdits segments (1A), une deuxième partie mâle (4) ayant une tête en forme de partie de sphère (4A) agencée pour être tenue dans l'autre desdits segments et une troisième partie (5) pour se loger sur lesdites première et deuxième parties et les accoupler, lesdites première et troisième parties ayant chacune des moyens complémentaires (3B, 5C) pour les fixer ensemble et lesdites deuxième et troisième parties ayant des moyens de coopération complémentaires (4B, 5D) procurant un ajustement serré entre elles lorsque les deuxième et troisième parties sont forcées l'une sur l'autre.

2. Dispositif selon la revendication 1, dans lequel lesdites première et deuxième parties sont identiques.

3. Dispositif selon la revendication 1 ou la revendication 2, dans lequel lesdites première et deuxième parties ont chacune la forme d'un boulon fileté à une extrémité, avec sa tête en forme de partie de sphère à son autre extrémité.

4. Dispositif selon la revendication 3, dans lequel ladite troisième partie a la forme d'une cheville ou d'un collier.

5. Dispositif selon la revendication 4, dans lequel ledit collier est pratiquement symétrique, avec deux filets de vis internes (5C, 5D) s'étendant respectivement depuis le centre de l'alésage (5B) du collier vers l'une et l'autre extrémité.

6. Dispositif selon la revendication 5, dans lequel l'un des filets de vis internes dudit collier est agencé pour être vissé sur les filets de l'un desdits boulons, tandis que l'autre filet de vis interne est agencé pour être poussé sur les filets de l'autre boulon pour constituer un ajustement serré.

7. Dispositif selon la revendication 5 ou la revendication 6, dans lequel les deux filets de vis internes dudit collier ont des pas différents l'un de l'autre.

8. Dispositif selon l'une des revendications 4, 5, 6 et 7, dans lequel ledit collier a un double cône externe de telle sorte qu'il se rétrécit en direction de chacune de ses extrémités depuis le point médian du collier.

9. Dispositif selon l'une quelconque des revendications 4 à 8, dans lequel la surface extérieure dudit collier est filetée ou dentelée (5A).

10. Dispositif selon l'une quelconque des revendications précédentes, dans lequel chacune desdites parties est en une matière plastique.

11. Dispositif selon l'une quelconque des revendications précédentes, dans lequel lesdites première et troisième parties sont d'un seul tenant l'une avec l'autre.

12. Dispositif d'accouplement selon l'une quelconque des revendications précédentes, en combinaison avec lesdits deux segments (1).

13. Combinaison selon la revendication 12, dans laquelle lesdits segments sont en béton.

14. Combinaison selon la revendication 13, dans laquelle les deux parties sont tenues dans les segments de revêtement de tunnel en béton par leurs portions de tête, tandis que les portions au-delà de leurs têtes s'étendent dans les évidements (7) dans les parois extrêmes des segments, les évidements de deux segments adjacents ayant une forme qui est complémentaire de celle de la troisième partie afin de la recevoir.

15. Combinaison selon l'une des revendications 13, 14 et 15, dans laquelle lesdits segments (1) incorporent lesdites première et deuxième parties (3, 5) respectivement.
